# DEMANDE DE BREVET EUROPEEN

(11) **EP 1 858 224 A1**
(43) Date de publication de la demande: **21.11.2007**
(21) Numéro de dépôt: 07108288.7
(22) Date de dépôt: 15.05.2007
(51) Int. Cl.: H04L 29/06

(54) **Méthode de mise en place des réseaux privés virtuels et contrôle d'accès distant**

(30) Priorité: 15.05.2006 FR 0604276
(71) Demandeur: Hajjeh, Ibrahim, 75013 Paris (FR); Badra, Mohamad, 63000 Clermont-Ferrand (FR)
(72) Inventeur: Hajjeh, Ibrahim, 75013 Paris (FR); Badra, Mohamad, 63000 Clermont-Ferrand (FR)
(74) Mandataire: Collin, Jérôme

(57) **Abrégé**

L'invention concerne un procédé de mise en place des réseaux virtuels privés et de contrôle d'accès entre l'usager des réseaux et le serveur en utilisant le protocole TLS ou une des ses versions (SSL, DTLS, TLS-PSK, ...), dans lequel est effectué un multiplexage/démultiplexage des connexions et sessions applicatives.

## Description

La présente invention concerne un procédé de mise en place des réseaux privés virtuels *(Virtual Private Network, VPN)* et de control d'accès distant en utilisant le protocole TLS (*Tansport Layer Security)* ou une des ses versions (SSL *(Secure Sockets Layer),* DTLS *(Datagram TLS),* TLS-PSK *(Pre-Shared-Key),* ... ).

Dans le cadre de l'invention, le terme "client" doit être compris dans le sens le plus général. Il désigne un ordinateur ou un appareil informatique (PDA, portable, téléphone mobile, carte à puce, porte USB, MMC, ...) géré par un système d'exploitation ou d'information. Il est équipé d'une ou plusieurs interfaces de communication, par exemple Ethernet, sans fil, mobile ou radio.

Le terme "serveur" doit être également compris dans le sens le plus général. Il désigne un ordinateur géré par un système d'exploitation et comportant au moins une interface de communication.

Le terme "client TLS" est un client qui implémente TLS ou une des ses versions (SSL, DTLS, ...).

Le terme "serveur TLS" est un serveur qui implémente TLS ou une des ses versions (SSL, DTLS, TLS-PSK, ...).

Le terme "client MultiTLS" est un client TLS qui implémente le procédé défini par cette invention.

Le terme "serveur MultiTLS" est un serveur TLS qui implémente le procédé défini par cette invention.

Enfin, et dans le cadre de l'invention, le terme "réseau" englobe les réseaux privés d'entreprises ou similaires, les réseaux Internet, les réseaux sans fil et mobiles, les réseaux locaux et les réseaux "extranets".

Les applications de la technologie VPN sont multiples et liées à la fois au concept de transmission fixe et mobile, à la flexibilité de l'architecture informatique (accès à travers un réseau publique, privé ou domestique) et à la fiabilité et la confidentialité et l'intégrité assurées par les normes du protocole TLS. Ceci exclue toute possibilité de reconstruction du signal et des données transmises par une interception malveillante.

Pour que les clients distants puissent accéder aux ressources de leurs entreprises, rien de plus pratique qu'un réseau privé virtuel. Afin de sécuriser ce lien, la plupart des fournisseurs des solutions de sécurité se lancent dans la mise en oeuvre des solutions VPN basées sur IPSec *(Internet Protocol Security)* ou sur le protocole SSL *(Secure Sockets Layer)* et sa version normalisée TLS.

TLS s'est imposé comme le protocole majeur de la sécurisation des échanges de données. Par exemple, le protocole TLS est très probablement le protocole utilisé par votre navigateur lorsque vous effectuez des achats sécurisés sous Internet. Il est actuellement intégré sur n'importe quel équipement informatique équipé d'un navigateur Internet, puisque ce dernier s'en sert pour établir des communications web sécurisées.

TLS est adapté à la sécurisation de différents types de trafic et d'échange. Parmi ces types, nous citons le transfert de fichiers, la transmission des emails, l'accès à distance, l'accès aux répertoires, l'accès aux objets, etc. Cependant, une version TLS adaptée aux protocoles de transport non fiables comme UDP est disponible. Cette version est appelée DTLS *(Datagram* TLS) et elle est décrite par le RFC 4347.

Plusieurs solutions VPN basées sur TLS sont disponibles mais elles sont limitées à la sécurisation des accès distants aux applications Web. C'est-à-dire que ces solutions encapsulent les données des applications dans de paquets HTTP avant de les chiffrer par TLS. Cela augmente énormément la taille de données à chiffrer et restreint l'usage de ces solutions aux liens fiables comme TCP, les applications qui s'exécutent au dessus d'un lien non fiable comme UDP ne peuvent pas se servir de ces solutions et par conséquent ces applications (vidéo, voix, etc.) ne peuvent pas être sécurisées avec ces solutions.

Pour cela, les grands sociétés et entreprises s'intéressent actuellement à étendre cette technologie pour pouvoir proposer de nouveaux services d'accès distant, principalement à des applications « non web ». Les démarches des grandes sociétés comme Cicso, Siemens et Nokia consistent à faire travailler leurs équipes de Recherche et Développement (R&D) afin d'étendre TLS au niveau de l'IETF *(Internet Engineering Task Force,* une organisation mondiale qui s'occupe de la normalisation des protocoles des réseaux et des télécommunications).

TLS fournit un cadre extensible pour l'intégration de nouveaux services et des nouvelles méthodes de chiffrement et d'authentification en utilisant le RFC 3546.

TLS définit des mécanismes d'authentification basés sur l'échange de certificats. Durant la phase de la négociation TLS, le serveur envoie son certificat au terminal qui doit vérifier, à son tour, si ce certificat est valide et non révoqué. L'usage de ces certificats nécessite des infrastructures à clés publiques qui servent à établir une chaîne de certification ou de confiance entre les entités communicantes. Durant cette phase d'authentification, le client envoie son certificat afin d'être authentifié auprès du serveur. Nous citons ici que d'autres méthodes sont définies avec TLS pour établir une authentification mutuelle comme décrit par le RFC 4279 et par le RFC 2712.

Le RFC 4279 *(Pre-Shared Key Ciphersuites for Transport Layer Security (TLS)* ou TLS-PSK) définit une liste de *CipherSuites* avec une authentification basée sur l'usage des clés partagées (PSK, *Pre-Shared Key)* à la place de certificats. Chaque clé partagée est identifiée par un identifiant *(PSK_identity).* Durant l'établissement de la session TLS, le client envoi l'identité du PSK au serveur. Ensuite, le client et le serveur utilisent le PSK pour générer les clés de la session.

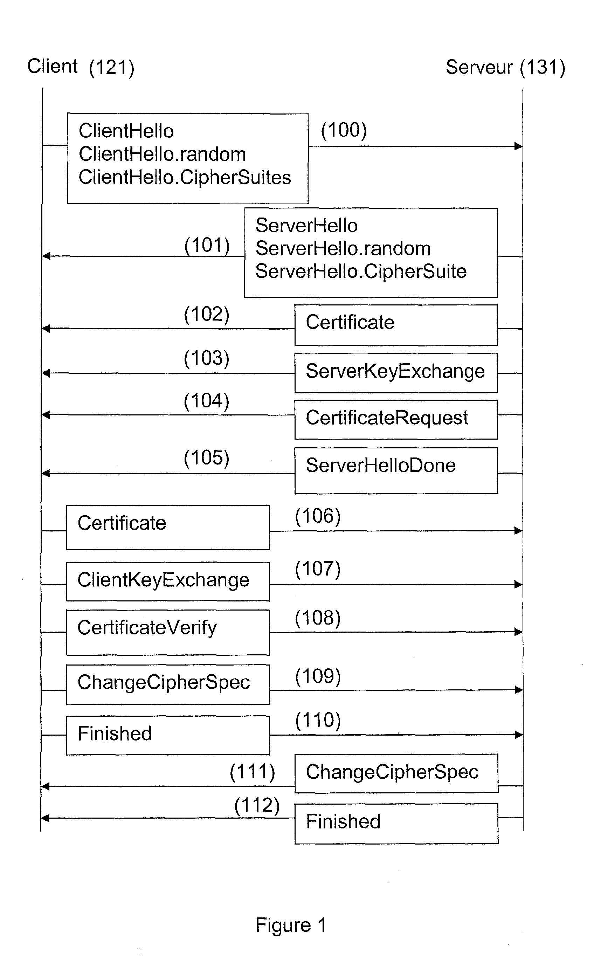

La figure 1 illustre la phase de la négociation *(Handshake)* du TLS entre un client (121) et un serveur (131), avec une authentification basée sur l'usage de certificats. Nous divisons cette phase en trois étapes.

Dans une première étape (100, 101, 102, 103, 104, 105), le client et le serveur négocient les paramètres de sécurité (comme les valeurs aléatoires, l'algorithme d'échange de clés, l'algorithme de chiffrement, la fonction de hachage, etc.) afin d'établir une session sécurisée.

La deuxième étape (106, 107, 108) consiste à authentifier le client auprès du serveur et à générer les clés cryptographiques de la session en utilisant la fonction PRF *(Pseudo Random Function).* Ces clés seront utilisées dans les opérations cryptographiques afin de protéger les données durant leur transfert. Les opérations cryptographiques utilisent les algorithmes cryptographiques négociés durant la première étape.

Durant la troisième étape (109, 110, 111, 112), le client et le serveur vérifient l'intégrité de leurs échanges en calculant le condensât de tous les messages transmis et reçus et en chiffrant le résultat avec la clé de chiffrement calculée durant la deuxième étape. Durant cette troisième étape, le serveur sera implicitement authentifié auprès du client. En effet, le client génère durant la deuxième phase une valeur aléatoire de 46 octets appelée *"premaster secret"* (107) et il la concatène avec la version négociée de TLS. Ensuite, il chiffre le résultat avec la clé publique du serveur envoyée dans le message *"Certificate"* (104). La valeur chiffrée est envoyée au serveur qui la déchiffre en utilisant sa clé privée pour obtenir le *"premaster secret".* Ce secret est utilisé à la fois par le client et le serveur pour générer le même secret *"master_secret".* Le *"master_secret"* est utilisé dans la génération des clés symétriques utilisées dans le chiffrement et dans le calcul du MAC *(Message Authentication Code).* Les premiers messages chiffrés et signés avec les clés générées sont les messages *"Finished"* (110, 112). Par conséquent, il est impossible pour une entité n'ayant pas la clé privée correspondante à la clé publique envoyée par le serveur durant la deuxième étape, de découvrir le *"premaster secret"* en clair et de générer les mêmes clés.

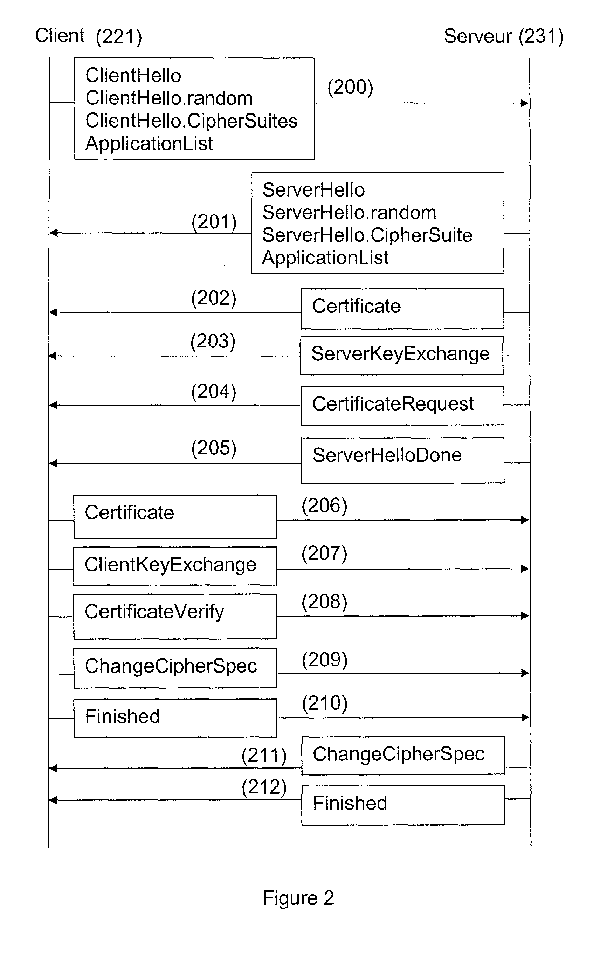

En référence à la figure 2, le client peut demander selon l'invention l'établissement d'un réseau VPN en envoyant au serveur une liste des applications *(ApplicationList* (200)) qu'il souhaite sécuriser par la session TLS à établir entre lui et le serveur. Le serveur choisit les applications qu'il accepte sécuriser et les envoie au client dans le message *ServerHello* (201) en utilisant le champ *(ApplicationList* (201)). Cette demande s'est établie en ajoutant une extension dans les messages *"ClientHello"* et *"ServerHello"* de la même manière définie par le RFC 3546 et en implémentant les fonctions (F1, F2, F3, F4, F5, F6, F7) définies ci-après. Le client et le serveur continuent leur négociation TLS de la même manière que celle décrite auparavant. Nous notons ici que lorsque une extension est utilisée avec TLS, le client et le serveur établissent la première étape de TLS en utilisant les messages *"ExtendedClientHello"* et *"ExtendedServerHello"* décrits par le RFC 3546 à la place des messages *"ClientHello"* et *"ServerHello".*

A titre d'exemple non limitatif, si le client souhaite sécuriser le trafic des applications HTTP, FTP et SMTP, il envoie dans son message *"ClientHello"* une extension contenant les noms de ces trois applications. Le serveur qui accepte de protéger FTP et HTTP par une seule session TLS, répond par le même type d'extension avec les noms des deux applications choisies. Une fois la session TLS établie, le client et le serveur utilisent les fonctions définies ci-après pour la gestion de leurs connexions.

Une autre manière pour l'établissement d'un réseau VPN est d'insérer une couche au dessus de TLS en implémentant les fonctions définies ci-après et en connectant via une session TLS à l'autre couche implémentée sur le serveur.

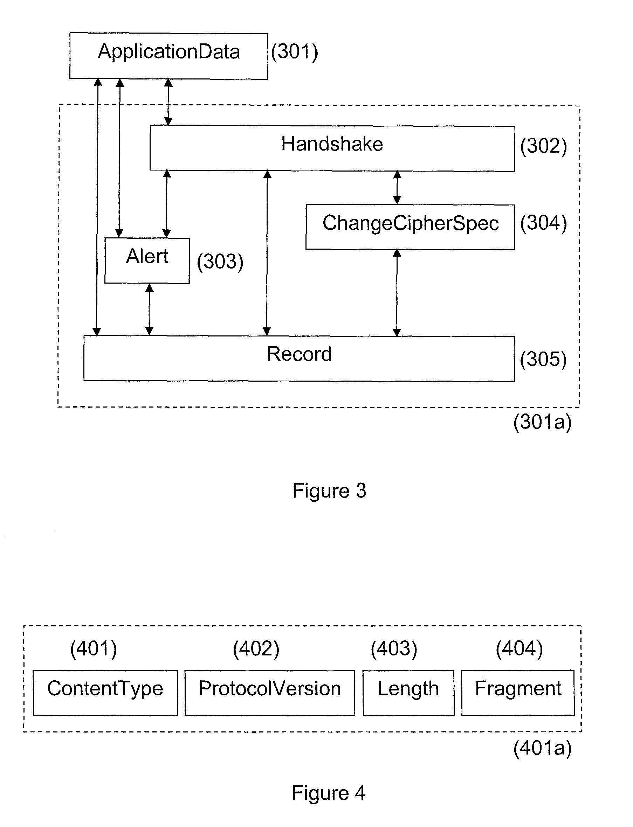

Nous nous référons à présent à la figure 3.

Le protocole TLS est composé de quatre sous protocoles (301 a) et définit quatre types de données: *"ApplicationData"* (301), *"Handshake"* (302), *"ChangeCipherSpec"* (303) et *"Alert"* (304). Ces types sont définis par TLS pour indiquer le type des messages transportés par la couche *"Record"* (305) de TLS. Nous précisons ici que le protocole TLS associe le type *"ApplicationData"* comme type de données quelque soit le type de l'application. C'est-à-dire, TLS n'établit pas une distinction entre les types de données applicatives. Cela est logique car selon la conception de TLS, le client et le serveur doivent établir une session TLS pour chaque application. Chacune de ces sessions est identifiée par un identificateur appelé *"session_id".*

A titre d'exemple non limitatif, si le client veut sécuriser les échanges FTP et HTTP avec le serveur, le client et le serveur doivent établir une session TLS spécifiée à FTP et une autre spécifiée à HTTP.

Nous nous référons à présent à la figure 4.

La taille maximale d'un paquet TLS est de 16484 octets. Les paquets applicatifs qui dépassent cette taille seront fragmentés dans un ou plusieurs *"Records"* TLS (401 a) avant d'être transmises. Les *"Records"* TLS contiennent quatre champs : le type de données *(ContentType* (401)), la version du protocole *(ProtocolVersion* (402)), la taille de données du fragment concerné *(Length* (403)) et le contenu du fragment *(Fragment* (404)).

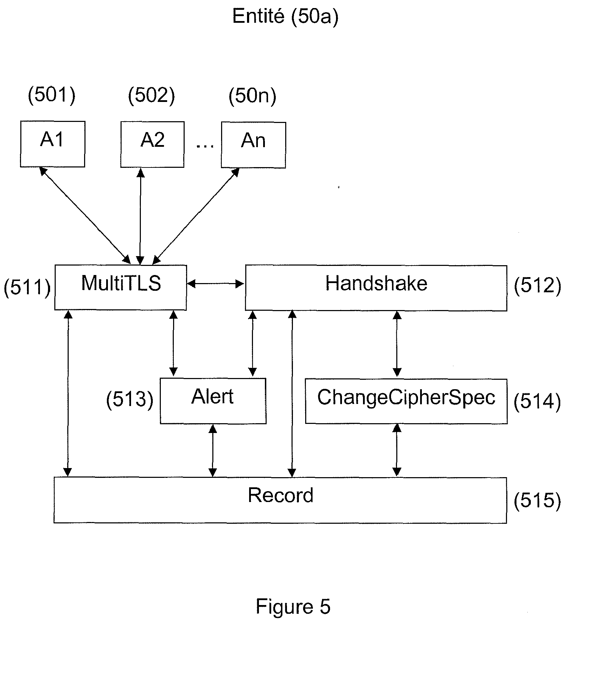

Nous nous référons à présent à la figure 5.

Nous définissons plusieurs fonctions afin d'établir la multiplexage/démultiplexage de plusieurs sessions applicatives dans une seule session TLS. L'ensemble des ces fonctions construit une sous couche au dessus de TLS que nous appelons MultiTLS. Cette couche traite les données envoyées par une application donnée avant d'être encapsulées dans des *"Records"* TLS. A la réception, les données seront traitées par la couche MultiTLS avant d'être communiquées à la couche applicative.

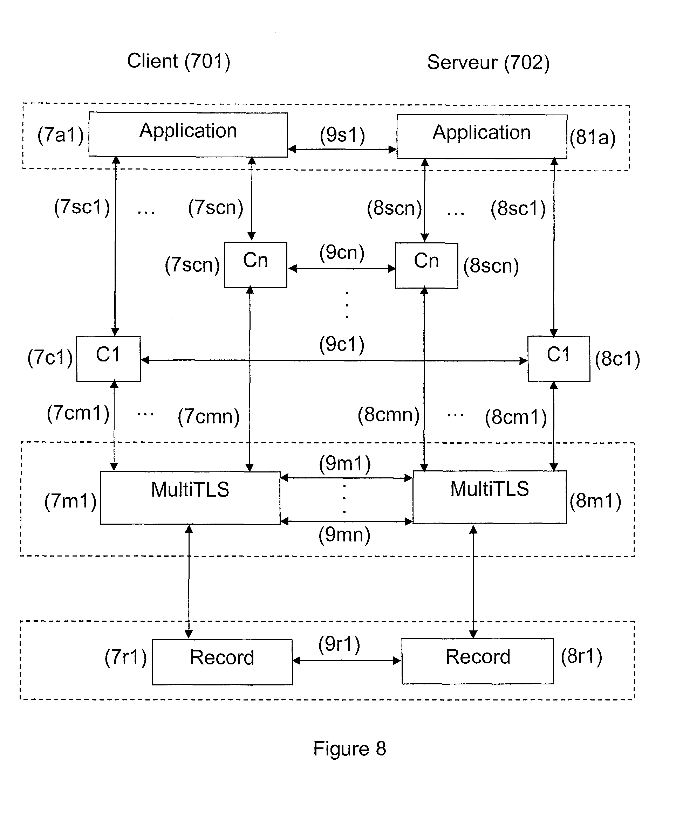

Nous nous référons à présent à la figure 8.

Avant de décrire ces fonctions, nous donnons une liste des notations que nous utilisons par la suite.

Session applicative (9s1) : une session initiale établie entre l'application du client (7a1) et celle du même type installée sur le serveur (81 a). A titre d'exemple non limitatif, la session HTTP est une session applicative établie entre une application HTTP installée à la fois sur le terminal du client et sur le serveur.

Connexion (9c1, ..., 9cn) : un lien établi entre l'application installée sur le terminal du client et celle installée sur le serveur. Après l'établissement de la session applicative, le client et le serveur peuvent établir plusieurs connexions (9c1, ..., 9cn) durant cette session.

Canal local ((7sc1, 7cm1), ..., (7scn, 7cmn), (8sc1, 8cm1), ..., (8scn, 8cmn)) : un lien établi entre l'application et la couche MultiTLS. Par exemple, (7cs1, 7cm1) est un canal local.

Canal MultiTLS (9m1, ..., 9mn) : un lien établi entre la couche MultiTLS installée sur le terminal du client (7m1) et celle installée sur le serveur (8m1).

Par conséquent, une connexion établie avec succès (entre une application installée à la fois sur le terminal du client (7a1) et sur le serveur (81a)) est une combinaison de trois canaux : le premier est un canal local établi entre l'application installée sur le terminal du client (7a1) et le client MultiTLS (7m1) ((par exemple (7sc1, 7cm1)), le deuxième est un canal MultiTLS établi entre le client MultiTLS (7m1) et le serveur MultiTLS (8m1) (par exemple (9m1)), et le troisième est un canal local établi entre le serveur MultiTLS (8m1) et l'application installée sur le serveur (81 a) (par exemple (8sc1, 8cm1)).

Max : la taille maximale des données que la couche MultiTLS accepte de recevoir sur un canal MultiTLS établi.

Dans le cadre de l'invention, les fonctions suivantes sont définies :
F1 : une requête (7f1) envoyée par la couche MultiTLS (71 a) pour demander l'établissement d'un canal MultiTLS. La requête aura lieu suite à une demande d'établissement d'une session ou d'une connexion applicative, envoyée par une application particulière.
F2 : une réponse envoyée (7f2) par la couche MultiTLS (71 b) en réponse à la requête F1 pour confirmer l'établissement du canal MultiTLS. Cette réponse signifie que l'application concernée et la couche MultiTLS qui a reçu la requête F1 acceptent l'établissement de la connexion ou de la session applicative.
F3 : une réponse envoyée (7f3) par la couche MultiTLS (71 b) en réponse à la requête F1 pour rejeter l'établissement du canal MultiTLS. Cette réponse signifie que l'application demandée ou la couche MultiTLS qui a reçu la commande F1 refusent l'établissement de la connexion ou de la session applicative.
F4 : une requête envoyée par la couche MultiTLS pour demander la clôture d'un canal MultiTLS. Cette requête aura lieu suite à une demande de clôture d'une session ou d'une connexion applicative, envoyée par une application particulière.
F5 : une réponse envoyée par la couche MultiTLS en réponse à la requête F4 pour confirmer la clôture d'un canal MultiTLS. Cette réponse signifie que l'application concernée et la couche MultiTLS qui a reçu la commande F4 acceptent la clôture de la connexion ou de la session applicative.
F6 : une fonction qui permet de formater le paquet afin de permettre à l'autre couche MultiTLS de récupérer les données applicatives et de les délivrer à l'application concernée.
F7 : sert à envoyer des données de notification. A titre d'exemple non limitatif, la taille de données maximale que la couche MultiTLS accepte à recevoir sur un canal MultiTLS peut augmenter ou diminuer. Dans ce cas, la fonction F7 sera utilisée pour notifier cette modification dans la taille maximale.

Toutes les requêtes, les réponses et les notifications sont transportées par le *"Record"* TLS avec le type *"ApplicationData".*

Nous allons à présent décrire un moyen de mise en oeuvre du procédé de mise en place d'un réseau VPN entre un client et un serveur.

Nous nous référons à présent à la figure 5.

Nous considérons une entité (50a) (client ou serveur) qui implémente le protocole TLS et la sous-couche MultiTLS. Nous supposons que le client souhaite sécuriser les données applicatives de type A1 (501), A2 (502), ..., An (50n) et que le serveur accepte sécuriser un certain nombre d'applications demandées par le client par une seule session TLS.

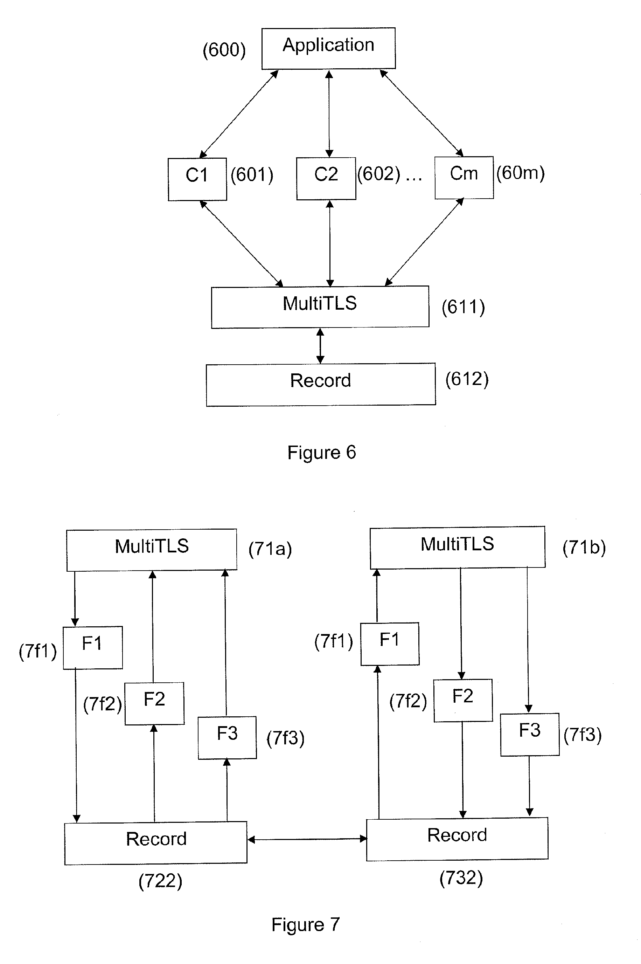

Nous nous référons aux figures 6 et 7.

Pour chaque application, MultiTLS va intercepter chaque commande envoyée par la couche applicative. Nous supposons que le client veut établir plusieurs connexions durant une session applicative d'une application quelconque (600). Par conséquent, chaque connexion nécessite l'établissement d'un canal local (601, 602, ..., 60m) entre l'application et la couche MultiTLS (611).

Le client MultiTLS (71 a) va donc traiter toutes les commandes d'établissement des connexions. Pour chaque commande, il va utiliser la fonction F1 (7f1) pour établir un canal MultiTLS avec le serveur MultiTLS (71 b). Le serveur MultiTLS va transférer la commande d'établissement de la connexion à l'application installée sur le serveur. A titre d'exemple non limitatif, la fonction F1 génère une requête avec un identificateur (qui sera concaténé avec un identificateur généré par le serveur pour construire l'identifiant global du canal MultiTLS), un Max et le type de l'application qui demande l'établissement de la connexion.

En retour, l'application installée sur le serveur va générer une réponse à la commande d'établissement de la connexion envoyée par l'application installée sur le terminal du client. Cette réponse sera traitée par le serveur MultiTLS en utilisant la fonction F2 (7f2) avant d'être transférée au client MultiTLS. Ensuite, le client MultiTLS transférera la réponse à l'application qui a envoyé la requête d'établissement de la connexion. Le client MultiTLS et le serveur MultiTLS répètent ces commandes autant de fois qu'il y a de commandes d'établissement des connexions. A titre d'exemple non limitatif, la fonction F2 génère une réponse avec un identificateur qui est la concaténation d'une moitié de l'identificateur générée par le client et d'une autre moitié générée par le serveur à la réception de la requête et un Max.

Une fois la connexion établie entre les deux applications, ces dernières peuvent ensuite échanger leurs données. Les données échangées seront interceptées par le client MultiTLS et le serveur MultiTLS en utilisant la fonction F6. A titre d'exemple non limitatif, la fonction F6 reçoit les données applicatives, les encapsule dans de paquets avec une en-tête contenant l'identifiant du canal MultiTLS dans lequel les données seront envoyées, la taille en octets de données transportées par le courant paquet et les données elles-mêmes. L'en-tête du paquet peut transporter des informations concernant le changement de la valeur du Max. cependant, ces informations peuvent être envoyées dans de paquets générées par la fonction F7.

A la fin de la connexion, l'application peut envoyer une demande de clôture qui sera interceptée par MultiTLS en utilisant la fonction F4. Cette demande sera confirmée par l'application concernée en envoyant une réponse qui sera à son tour traitée par MultiTLS en utilisant la fonction F5. A titre d'exemple non limitatif, la fonction F4 génère une requête de la terminaison d'un canal MultiTLS en incluant dans la requête l'identifiant du canal MultiTLS à terminer. La fonction F5 génère une réponse de confirmation contenant le même identifiant.

Une entité MultiTLS qui souhaite rejeter l'établissement d'un canal MultiTLS utilise la fonction F3 (7f3). Dans ce cas, cette entité ne génère pas sa moitié de l'identifiant du canal MultiTLS. Elle inclus cependant, dans sa réponse générée par F3, la moitié de l'identifiant générée par l'expéditeur de la requête.

## Revendications

1. Procédé de multiplexage/démultiplexage de connexions et de sessions applicatives à travers une seule session sécurisée établie entre un client et un serveur par un protocole TLS ou par une des ses versions ou extensions, notamment DTLS, SSL, TLS-PSK, **caractérisé en ce que** :
- on traite des données applicatives issues de ou destinées à une couche applicative par une pluralité de fonctions (f1, f2, f3, f4, f5, f6, f7) gérant le multiplexage/démultiplexage des connexions et des sessions applicatives, ces fonctions étant implémentées dans une couche dédiée appelée MultiTLS ;
- on négocie l'utilisation de ces fonctions avec le protocole TLS ou avec l'une de ses versions ou extensions.

2. Procédé selon la revendication précédente, **caractérisé en ce qu'**on génère, dans la couche MultiTLS, une requête servant à demander l'établissement d'un canal MultiTLS entre le client et le serveur, par le biais d'une fonction (f1) traitant les données appartenant aux connexions et aux sessions applicatives.

3. Procédé selon la revendication précédente, **caractérisé en ce qu'**on génère une réponse servant à confirmer la requête générée par la fonction (f1).

4. Procédé selon la revendication précédente, **caractérisé en ce qu'**on construit des paquets de données transportant les données applicatives entre le client et le serveur, par le biais d'une fonction (f4).

5. Procédé selon l'une des revendications 3 ou 4, **caractérisé en ce qu'**on envoie des données de notification, par le biais d'une fonction (f5).

6. Procédé selon l'une des revendications 3 à 5, **caractérisé en ce qu'**on génère une requête servant à demander la clôture d'un canal MultiTLS, impliquant la fin d'une connexion ou d'une session applicative.

7. Procédé selon la revendication précédente, **caractérisé en ce qu'**on génère une réponse servant à confirmer la requête générée par la fonction (f6), par le biais d'une fonction (f7).

8. Procédé selon la revendication 2, **caractérisé en ce que**, si la requête est rejetée, on génère une réponse servant à indiquer le rejet de la requête générée par la fonction (f1), par le biais d'une fonction (f3).

9. Dispositif serveur pour le multiplexage/démultiplexage de connexions et de sessions applicatives à travers une seule session sécurisée établie entre un client et un serveur par le protocole TLS ou par une des ses versions ou extensions, notamment DTLS, SSL, TLS-PSK, **caractérisé en ce qu'**il comprend une couche applicative, pouvant échanger des données applicatives avec une autre couche appelée MultiTLS implémentant une pluralité de fonctions (f1, f2, f3, f4, f5, f6, f7) pour traiter les données issues de la couche applicative et pour négocier l'utilisation de ces fonctions avec le protocole TLS ou avec l'une de ses versions ou extension.

10. Dispositif client pour le multiplexage/démultiplexage de connexions et de sessions applicatives à travers une seule session sécurisée établie entre un client et un serveur par le protocole TLS ou par une des ses versions ou extensions, notamment DTLS, SSL, TLS-PSK, **caractérisé en ce qu'**il comprend une couche applicative, pouvant échanger des données applicatives avec une autre couche appelée MultiTLS implémentant une pluralité de fonctions (f1, f2, f3, f4, f5, f6, f7) pour traiter les données destinées à la couche applicative et pour négocier l'utilisation de ces fonctions avec le protocole TLS ou avec l'une de ses versions ou extension.
